# EUROPEAN PATENT SPECIFICATION

(11) **EP 4 569 057 B1**
(45) Date of publication and mention of the grant of the patent: **03.09.2025**
(21) Application number: 24787148.6
(22) Date of filing: 09.10.2024
(51) Int. Cl.: C10M 149/04, C10N 20/02, C10N 20/04, C10N 30/04, C10N 30/10

(54) **ACRYLATE-OLEFIN COPOLYMERS AS HIGH VISCOSITY BASE FLUIDS**
ACRYLAT-OLEFIN COPOLYMERE ALS HOCHVISKOSE BASISFLÜSSIGKEITEN
COPOLYMÈRES D'ACRYLATE-OLÉFINE UTILISÉS EN TANT QUE FLUIDES DE BASE À VISCOSITÉ ÉLEVÉE

(30) Priority: 16.10.2023 EP 23203764
(43) Date of publication of application: 18.06.2025
(73) Proprietor: Evonik Operations GmbH, 45128 Essen (DE)
(72) Inventor: MAIER, Stefan Karl, 64372 Ober-Ramstadt (DE); NOTHDURFT, Katja, 45721 Haltern am See (DE); ZIEGLER, Fabian, 64289 Darmstadt (DE); JANSSEN, Dieter, 64823 Gross-Umstadt (DE); HILF, Stefan, 64673 Zwingenberg (DE)
(74) Representative: Evonik Patent Association
(86) International application number: PCT/EP2024/078309
(87) International publication number: WO 2025/082809

(56) References cited:
- EP-A1- 4 015 604
- US-A- 3 968 148

## Description

### TECHNICAL FIELD OF THE INVENTION

The invention relates to nitrogen-functionalized acrylate-olefin copolymers and to a method for the preparation of these polymers. The present invention is also directed to lubricant compositions comprising the aforementioned copolymers, as well as to the use of the copolymers as a lubricant additive or a synthetic base fluid in a lubricating oil composition, preferably in a gear oil composition, a transmission oil composition, a hydraulic oil composition, an engine oil composition, a marine oil composition, an industrial lubricating oil composition or in grease.

### BACKGROUND OF THE INVENTION

The present invention relates to the field of lubrication. Lubricants are compositions that reduce friction between surfaces. In addition to allowing freedom of motion between two surfaces and reducing mechanical wear of the surfaces, a lubricant also may inhibit corrosion of the surfaces and/or may inhibit damage to the surfaces due to heat or oxidation. Examples of lubricant compositions include, but are not limited to, engine oils, transmission fluids, gear oils, hydraulic fluids, industrial lubricating oils, greases and metalworking oils.

Lubricants typically contain a base fluid and variable amounts of additives. Conventional base fluids are hydrocarbons, such as mineral oils. The terminology base oil or base fluid is commonly used interchangeably. Here, base fluid is used as a general term.

A wide variety of additives may be combined with the base fluid, depending on the intended use of the lubricant. Examples of lubricant additives include, but are not limited to, viscosity index improvers, thickeners, pour point depressants, oxidation inhibitors, corrosion inhibitors, dispersing agents, high pressure additives, anti-foaming agents and metal deactivators.

Typical non-polymeric base fluids are less effective as lubricants, because of their low viscosity and further decreased viscosity at higher operating temperatures. Therefore, polymeric additives are used to thicken the base oil and reduce the change in viscosity with change in temperature. The term Viscosity Index (VI) is used to describe this change in viscosity with temperature. The lower the VI, the greater the change in viscosity with temperature, and vice versa. Thus, a high VI is desired for lubricant formulations. In order to improve the VI, polymeric additives or Viscosity Index Improvers (VII) may be added to a lubricant formulation.

It is well-known in the art that alkyl acrylates are not recommended in VI improver applications, and commercial VI improvers are usually based on methacrylates. While literature (Rashad et al. J. of Petr. Sci. and Engineering 2012, 173-177; Evin et al. J. of Sol. Chem 1994, 325-338) and patents (WO96/17517) exist, it is generally known that the performance of polyacrylates as VI improver is inferior to the ones of polymethacrylates. Especially in WO96/17517, it is mentioned that it was unexpectedly found that poly(alkyl acrylate) esters typically fail to adequately reduce the effect of temperature on viscosity when used in the hydraulic fluids.

The drawback of adding polymeric additives to a lubricant formulation is that they will undergo shear stress and will mechanically degrade over time. Higher molecular weight polymers are better thickeners but will be more prone to shear stress leading to polymer degradation. In order to decrease the amount of polymer degradation, the molecular weight of a polymer can be decreased, thereby obtaining a more shear stable polymer. However, these shear stable low molecular weight polymers are no longer very effective thickeners and must be used in larger concentrations in the lubricant in order to reach a desired viscosity. These low molecular weight polymers typically have molecular weights below 20,000 g/mol and are also called synthetic high viscosity base fluids. High viscosity base fluids are used to lift the VI and to thicken lubricant formulations with demanding shear stability requirements. A typical application are gear oils which have very demanding requirements due high mechanical stress and a broad temperature range in operation.

Typical products in this market are high viscosity polyalphaolefins (PAOs) and metallocene polyalphaolefins (mPAOs), typically sold in viscosity ranges from 40 to 300 cSt at 100°C (Choudary et al. Lubr. Sci. 2012, 23-44), whose key feature is good handling properties in term of viscosity since these base fluids are polymeric in nature and provide for an improved viscosity index. However, the apolar nature of the PAO base oils is a disadvantage as can lead to poor solubility of DI packages and ageing products in oil, which can cause subsequent problems.

It has been already described that higher polarity is provided by copolymers of alpha-olefins with maleates (DE3223694), copolymers of alpha-olefins and acrylates (DE2243064), copolymers of alpha-olefins and methacrylates (EP0471266) or terpolymers based on the aforementioned monomers (WO2020/078770). For example, US3968148 claims oligomers made from 10 to 90 weight percent, preferably 40 to 85 weight percent, of 1-alkenes, 1 to 35 weight percent of alkyl (meth)acrylates and 1 to 35 weight percent of acrylic acids, having a number-average molecular weight in the range of from 1000 to 4000 g/mol. Another example is EP4015604, which describes acrylate-olefin copolymers for use as high viscosity base stocks or lubricant additives in a lubricating oil composition. The resulting lubricating oil compositions show good low temperature properties and good viscosity index level, when compared with methacrylate-olefin copolymers and pure polyacrylates. The document is silent on the problem of dispersancy and sludge sedimentation.

Dispersant additives can prevent sedimentation of this sludge and contribute to better ratings in the test and finally longer lifetimes of the finished lubricants. The disadvantage of dispersing sludge is a viscosity increase of the lubricant. Keeping this viscosity increase as low as possible is a major performance parameter for a dispersant. Typical dispersants are for example end-functionalized polyisobutylene (PIB) oligomers.

There is still the need to provide highly shear stable synthetic base fluids or lubricating oil additives, which, in lubricant oil compositions, have a positive influence on oil solubility and component solubility, as well as on low temperature performance. Furthermore, the new products should not only be able to thicken an oil to a desired viscosity, but should also improve the sludge sedimentation and dispersancy performance of the resulting lubricating oil composition.

### BRIEF SUMMARY OF THE INVENTION

The inventors of the present invention have surprisingly found that nitrogen-functionalized acrylate-olefin copolymers comprising a certain amount of amino functional (meth)acrylate ester, as defined in claim 1, are able to thicken very efficiently an oil to a desired viscosity, and simultaneously also improve the sludge sedimentation and dispersancy performance of the resulting lubricating oil composition. As exemplified in the experimental part of the present invention, it has unexpectedly been found that the specific weight ratio combination of acrylate monomers, with C₈-C₁₄ alpha-olefins and amino functional (meth)acrylate ester monomers, as defined in claim 1, are crucial to achieve a combination of good thickening properties and excellent sludge sedimentation reduction, while still maintaining good low temperature properties. Furthermore, these copolymers are highly shear stable and have a high viscosity index to reduce the effect of changes in viscosity with temperature.

Accordingly, a first aspect of the invention is an acrylate-olefin copolymer comprising amino functional (meth)acrylate ester monomer units as defined in claim 1 and its dependent claims.

A second aspect of the invention is a method for preparing the nitrogen-functionalized acrylate-olefin copolymers according to the invention.

A third aspect of the invention is a lubricant composition comprising at least one base oil and at least one nitrogen-functionalized acrylate-olefin copolymer according to the invention.

A fourth aspect of the invention is a method of thickening a lubricating oil composition and improving its dispersancy and/or reducing the sludge sedimentation, by adding the nitrogen-functionalized acrylate-olefin copolymer of the invention, as a lubricant additive or a synthetic base fluid, to said lubricating oil composition.

### DETAILED DESCRIPTION OF THE INVENTION

### Copolymer according to the invention

The present invention relates to a copolymer comprising:
a) 60 to 99.8% by weight, based on the total weight of the copolymer, of monomer units derived from at least one acrylate of formula (I), 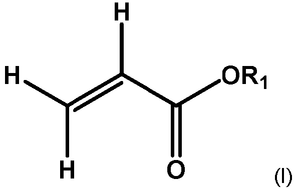 wherein R₁ means a linear or branched alkyl group having from 8 to 15 carbon atoms,
b) 0.1 to 39.9 % by weight, based on the total weight of the copolymer, of monomer units derived from at least one non-functionalized alpha-olefin of formula (II), 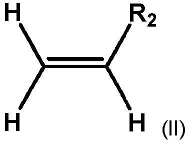 wherein R₂ means a linear alkyl group having from 8 to 14 carbon atoms, and
c) 0.1 to 5% by weight, based on the total weight of the copolymer, of monomer units derived from at least one amino functional (meth)acrylate ester of formula (III), 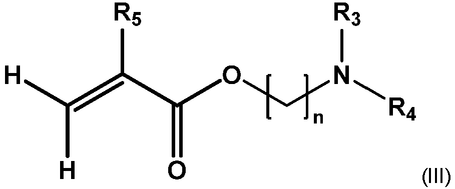
   wherein n is an integer of 1 to 10,
   wherein R₃ and R₄ are independently selected from a linear or branched alkyl group having from 1 to 5 carbon atoms, and
   wherein R₅ is a hydrogen or a methyl group,
   and wherein the copolymer has a weight-average molecular weight from 5,000 to 30,000 g/mol according to DIN 55672-1.

The terms "polymer" and "copolymer" are used interchangeably to define the copolymer according to the present invention.

In the present invention, the term "alkyl methacrylate" refers to esters of methacrylic acid and the term "alkyl acrylate" refers to esters of acrylic acid. The term "(meth)acrylate" refers to esters of acrylic acid, esters of methacrylic acid or a mixture of esters of acrylic acid and methacrylic acid.

Within the meaning of the present invention, the monomer composition corresponds to the monomers used to prepare the polymer according to the present invention (not including other reactants such as initiators, stabilizers).

According to the present invention, the copolymer of the invention comprises 60 to 99.8 % by weight, based on the total weight of the copolymer, of monomer units a) derived from acrylate monomer of formula (I). Preferably, the copolymer comprises from 70 to 89.5 % by weight, more preferably from 74 to 84 % by weight, of monomer units a) derived from acrylate monomer of formula (I), based on the total weight of the copolymer.

The acrylates a) of formula (I) refer to esters of acrylic acid with straight chain or branched alcohols having 8 to 15 carbon atoms. The term encompasses individual acrylic esters with an alcohol of a particular length, and likewise mixtures of acrylic esters with alcohols of different lengths.

Particularly preferred acrylates a) of formula (I) are selected from the group consisting of n-octyl acrylate, 2-ethylhexyl acrylate, 2-propylheptyl acrylate, isononyl acrylate, n-decyl acrylate, isodecyl acrylate, isotridecyl acrylate, lauryl acrylate, or a mixture thereof.

According to the present invention, the copolymer of the invention comprises 0.1 to 39.9 % by weight, based on the total weight of the copolymer, of monomer units b) derived from at least one non-functionalized alpha-olefin of formula (II), wherein R₂ means a linear alkyl group having from 8 to 14 carbon atoms. According to one aspect of the invention, it is preferred that the copolymer comprises from 10 to 29.5 % by weight, more preferably from 15 to 25 % by weight, of monomer units b) derived from at least one non-functionalized alpha-olefin of formula (II), based on the total weight of the copolymer.

Most preferred non-functionalized alpha-olefins b) of formula (II) are selected from the group consisting of decene, dodecene, tetradecene, hexadecene, or a mixture thereof.

According to the present invention, the copolymer of the invention also comprises 0.1 to 5 % by weight, based on the total weight of the copolymer, of monomer units c) derived from at least one amino functional (meth)acrylate ester of formula (III). Preferably, the copolymer comprises from 0.5 to 4.5 % by weight, more preferably from 0.8 to 4.5 % by weight, of monomer units c) derived from at least one non-functionalized alpha-olefin of formula (II), based on the total weight of the copolymer.

Most preferred amino functional (meth)acrylate ester c) of formula (III) are selected from the group consisting of 2-dimethylamino ethyl methacrylate, 2-dimethylamino ethyl acrylate, 2-diethylamino ethyl methacrylate, 2-diethylamino ethyl acrylate, or a mixture thereof.

According to another aspect of the invention, it is preferred that the copolymer has a kinematic viscosity from 100 to 1,000 mm²/s at 100°C according to ASTM D 445, more preferably from 120 to 700 mm²/s at 100°C according to ASTM D 445, even more preferably from 150 to 500 mm²/s at 100°C according to ASTM D 445.

According to another preferred aspect of the invention, the total content of monomer units derived from monomers a), b) and c) in the copolymer of the invention sums up to 90 % by weight or more, more preferably sums up to 95% by weight or more, even more preferably sums up to 98 % by weight or more, most preferably sums up to 100 % by weight, based on the total weight of the copolymer.

According to the present invention, the copolymer has a weight-average molecular weight from 5,000 to 30,000 g/mol, preferably from 8,000 to 30,000 g/mol, more preferably from 10,000 to 25,000 g/mol, even more preferably from 12,000 to 20,000 g/mol, according to DIN 55672-1.

According to the present invention, the weight-average molecular weight (M_{w}) and the number-average molecular weight (Mₙ) of the polymers is determined by gel permeation chromatography (GPC) according to DIN 55672-1 using polymethylmethacrylate (PMMA) calibration standard using the following measurement conditions:
Eluent: tetrahydrofuran (THF) including 0.02M 2-diethylamino ethylamine
Operation temperature: 35 °C
Columns: the column set consists of one pre-column (SDV 10µ; 8 x 50 mm) and four columns: SDV 106 Å, SDV 105 Å and 2 x SDV 103 Å (PSS Standards Service GmbH, Mainz, Germany), all four columns have a size of 300 x 8 mm and an average particle size of 10 µm.
Flow rate: 1mL/min
Injected volume: 100 µL
Instrument: Agilent 1100 series consisting of an autosampler, pump and column oven
Detection device: a refractive index detector from the Agilent 1260 series.

Preferably, the copolymers of the invention have a very low degree of cross-linking and a narrow molecular weight distribution, which further contributes to the shear resistance. The low degree of crosslinking and the narrow molecular weight are reflected in the polydispersity index of the copolymers. Preferably, the polydispersity index (PDI) of the copolymers according to the invention is in the range of 1.0 to 5.0, more preferably of 1.0 to 4.5, even more preferably of 1.0 to 3.5, most preferably in the range of 1.5 to 3.0. A polydispersity index in the range of 1.0 to 3.5 is considered optimal for most industrial applications with regard to the shear resistance of the copolymers. The polydispersity index is defined as the ratio of weight-average molecular weight to number-average molecular weight (M_{w}/Mₙ).

According to a preferred aspect of the present invention, the copolymer of the invention has a COC flashpoint above 250°C according to ASTM D92.

According to an aspect of the present invention, the monomer composition may also comprise further monomers d), other than the monomers a), b) and c), as long as the properties of the nitrogen-functionalized acrylate-olefin copolymer are not negatively affected.

According to the invention, the copolymer is a statistical copolymer, wherein the monomer units a), b) and c), and optionally any other monomer units d), are distributed randomly, and sometimes unevenly, in the copolymer.

### Method for preparing the copolymer according to the invention

According to the present invention, the above-mentioned polymers are prepared following the method comprising the steps of:
i) providing a monomer composition as described above; and
ii) initiating radical polymerization in the monomer composition.

Standard free-radical polymerization is detailed, inter alia, in Ullmann's Encyclopedia of Industrial Chemistry, Sixth Edition. In general, a polymerization initiator and optionally a chain transfer agent are used for this purpose.

The polymerization step ii) can be conducted under standard pressure, reduced pressure or elevated pressure. In the context of the present invention, the term "standard pressure" means no added pressure, but ambient or atmospheric pressure.

For the radical copolymerization of olefins with acrylates, the polymerization temperature is critical. In general, the copolymerization temperature is in the range from 130 to 180°C, preferably from 140 to 170°C.

The polymerization step ii) may be performed with or without dilution in oil or any solvent. Preferably, the polymerization step ii) is made without dilution in oil or any solvent.

Preferably, step ii) comprises the addition of a radical initiator. Preferably, the radical initiator is selected from di-tert-amyl-peroxide, 2,2-di-(tert-butylperoxy) butane, 1,1-di-tert-butylperoxy-3,3,5-trimethylcyclohexane, dicumyl peroxide or di-tert-butyl-peroxide. Preferably, the total amount of radical initiator relative to the total weight of the monomer mixture is 0.01 to 5% by weight, more preferably 0.1 to 1% by weight. Preferably, the total amount of radical initiator is added continuously over the course of the copolymerization reaction (ii).

Preferably, the copolymerization step ii) is made by feeding the acrylate monomers a), and the monomers c) and optionally any other comonomers, together with the initiator to the non-functionalized alpha-olefin monomers b). Preferably, the total reaction time of the radical polymerization is 2 to 5 hours, more preferably 2 to 4 hours, most preferably 3 hours.

In another preferred aspect of the invention, a third step iii) is optionally performed, corresponding to a distillation step to remove the unreacted alpha-olefin monomer b). Preferably, residual unreacted alpha-olefin monomer b) is removed by distillation at a temperature from 140 to 180°C and pressures as low as 5 mbar using a rotary evaporator.

### Lubricating oil compositions

As indicated above, the present invention also relates to a lubricating oil composition comprising at least one base oil and at least one copolymer as defined in the present invention.

The base oils correspond to lubricant base oils, mineral, synthetic or natural, animal or vegetable oils suited to their use/chosen depending on the intended use.

The base oils used in formulating the lubricating oil compositions according to the present invention include, for example, conventional base stocks selected from API (American Petroleum Institute) base stock categories known as Group I, Group II, Group III, Group IV and Group V. The Group I and II base stocks are mineral oil materials (such as paraffinic and naphthenic oils) having a viscosity index (or VI) of less than 120. Group I is further differentiated from Group II in that the latter contains greater than 90% saturated materials and the former contains less than 90% saturated material (that is more than 10% unsaturated material). Group III is considered the highest level of mineral base oil with a VI of greater than or equal to 120 and a saturates level greater than or equal to 90%. Group IV base oils are polyalphaolefins (PAO). Group V base oils are esters and any other base oils not included in Group I to IV base oils. These base oils can be used individually or as a mixture.

Preferably, the base oil included in the lubricating oil composition of the present invention is selected from the group consisting of an API Group II base oil, an API Group III base oil, API Group IV base oil, or a mixture thereof. Most preferably, the lubricant composition comprises an API Group III base oil or a mixture thereof.

Preferably, the lubricating oil composition comprises from 0.1 to 99.9% by weight, more preferably from 3 to 99% by weight, of the nitrogen-functionalized acrylate-olefin copolymer according to the invention, based on the total weight of the lubricating oil composition.

In a preferred embodiment of the invention, the lubricating oil composition comprises from 0.1 to 99.9% by weight, preferably from 1 to 97% by weight, of at least one base oil and from 0.1 to 99.9% by weight, preferably from 3% to 99% by weight, of at least one copolymer according to the present invention, based on the total weight of the lubricating composition.

All preferred aspects of the polymer, base oil and amounts as listed above apply for this lubricating oil composition.

The lubricating oil compositions according to the present invention may also comprise any other additional additives suitable for use in the formulations. These additives include additional viscosity index improvers, pour point depressants, dispersants, demulsifiers, defoamers, lubricity additives, friction modifiers, antioxidants, detergents, dyes, corrosion inhibitors and/or odorants.

According to a preferred aspect of the invention, the total content of the copolymer according to the invention and base oil in the lubricant composition sums up from 90% by weight or more, more preferably sums up from 95% by weight or more, based on the total weight of the lubricant composition.

### Applications for the copolymer of the invention

The invention also relates to the use of a nitrogen-functionalized acrylate-olefin copolymer according to the present invention, as a lubricant additive or a synthetic base fluid, by adding said copolymer in a lubricating oil composition.

The invention relates to a method of thickening a lubricating oil composition and improving its dispersancy and/or reducing the sludge sedimentation, by adding the nitrogen-functionalized acrylate-olefin copolymer of the invention, as a lubricant additive or a synthetic base fluid, to said lubricating oil composition.

Preferably, the lubricating oil composition is a gear oil composition, a transmission oil composition, a hydraulic oil composition, an engine oil composition, a marine oil composition, an industrial lubricating oil composition or in grease.

### EXPERIMENTAL PART

The invention is further illustrated in detail hereinafter with reference to examples and comparative examples, without any intention to limit the scope of the present invention. All percentages in relation to monomers or base fluids given in the tables below are weight percentages (wt%).

### Abbreviations

- Acr.: acrylate
- Anglamol 6043: additive package commercially available from Lubrizol
- BF-40: Brookfield viscosity measured at -40°C in accordance with ASTM D2983
- BV: bulk viscosity
- BV100: bulk viscosity @100°C in accordance with ASTM D445
- cSt: centistokes corresponding to mm²/s in SI units
- cP: centipoise corresponding to mPa·s in SI units
- DBPO: di-tert-butyl peroxide
- Dec: 1-decene
- DMAEMA: 2-dimethylamino ethyl methacrylate
- EHA: 2-ethylhexyl acrylate
- FP: Flashpoint
- HEMA: 2-hydroxyethyl methacrylate
- IDA: isodecyl acrylate
- Ini: initiator
- KRL: Tapered Roller Bearing Shear Stability Test according to CEC L-45-A-99
- KV: kinematic viscosity measured according to ASTM D445
- KV40: kinematic viscosity measured @40°C to ASTM D445
- KV100: kinematic viscosity measured @100°C to ASTM D445
- LA: lauryl acrylate or dodecyl acrylate
- Mₙ: number-average molecular weight
- M_{w}: weight-average molecular weight
- n.m.: not measured
- PDI: polydispersity index
- PHA: 2-propylheptyl acrylate
- PPD: pour point depressant
- SL: shear loss determined at 100°C after KRL (20 hours run at 60°C)
- TAN: total acid number according to ASTM D664
- VI: viscosity index
- VPL 1-300: Evonik VISCOPLEX^{®} 1-300, polyalkylmethacrylate pour point depressant
- Yubase 4: Group III base oil from SK Lubricants with a KV100 of 4 mm²/s
- Yubase 6: Group III base oil from SK Lubricants with a KV100 of 6 mm²/s

### Test methods

| | |
|---|---|
| KV | ASTM D445 |
| VI | ASTM D2270 |
| KRL | CEC L-45-A-99 |
| BF | ASTM D2983 |
| TAN | ASTM D664 |
| FP | ASTM D92 |

In the present invention, the bulk viscosity (BV) of the polymer (product obtained from polymerization reaction) corresponds to the kinematic viscosity (KV) of the resulting product of the polymerization measured in accordance with ASTM D445. Thus, the bulk viscosity of the polymers (BV100) as shown in Table 1 below, were measured as kinematic viscosity at 100°C in accordance with ASTM D445.

The oxidative performance of the inventive and comparative examples in the present invention were evaluated using an oxidation test (CEC SG-L-048 Oxidation Stability of Lubricating Oils used in Automotive Transmissions by Artificial Ageing). The performance of a lubricating oil composition in the oxidation test according to CEC SG-L-48 is an important criteria for automotive gear oils. Parts of this test are a visual inspection of residues in the glass tube and a chromatographic test which both indicate how well the lubricant can prevent the sedimentation of insoluble oxidation products. The method is conducted at 160°C for 192 hours. The kinematic viscosity at 40 and 100°C as well as the acid number (TAN, ASTM D664) of the fresh formulation is measured before the oxidation test (fresh oil) and compared to the corresponding values after oxidation (oxidized oil). The difference of the KV100 values between the fresh oil and the oxidized oil is termed as "delta KV100". Additionally, a blotterspot test is performed to evaluate the dispersancy performance by placing a single drop of the formulation after oxidation (80°C) on a patch of blotter paper and evaluating size of the spot. A higher value for the blotterspot area corresponds to a better dispersant.

### Examples

### Synthesis procedure of the inventive nitrogen-functionalized acrylate-olefin copolymer Ex. 1

1.406 g of DBPO (0.5 wt% relative to the monomers in the feed) dissolved in 270.75 g IDA and 10.5 g DMAEMA (2.8 wt% relative to all monomers) was slowly fed to 93.75 g of 1-decene (25 wt% relative to all monomers) under nitrogen at 150°C for 3 hours. After stirring for another 1.2 hours, the resulting clear polymer was cooled down. Subsequently, the residual decene was removed by distillation at 160°C and pressures as low as 5 mbar using a rotary evaporator. The amount of decene incorporated in the polymer is determined gravimetrically assuming that no residual (meth)acrylate monomer is present.

All examples were prepared in the same way as inventive example Ex.1, except that the amounts of reactants and other reaction conditions were changed as listed in Table 1. For Ex.1 to Ex.5, 0.2 wt% of stabilizer (4-methyl-2,6-di-tert-butylphenol) relative to the reaction mixture was added before the distillation step.

Further details regarding the synthetic procedures of the individual examples are provided in Table 1 together with properties of the polymers. The alpha-olefin monomers are always first charged to the reactor. The acrylate and dispersant monomers and the initiator are then fed over a set period of time. For nitrogen-functionalized acrylate-olefin copolymers with acrylate (mixtures) and dispersant monomer, all of them were mixed with the initiator before feeding to the olefin. All examples were prepared with 0.5 wt% of DBPO relative to the monomers in the feed, except for Ex.5 which only used 0.3 wt% of initiator relative to the monomers in the feed. The temperatures given in Table 1 correspond to the reaction temperature during the feed.

Formulations comprising the inventive and comparative polymers of Table 1 were prepared. The ratio of the different components is provided in Tables 2 and 3. The properties of the different formulations such as viscosity index, kinematic viscosity, Brookfield viscosity and shear loss are shown along with the results from the oxidation test. The target was to obtain formulations fulfilling SAE 75W-90 standard (SAE is the organization Society of Automotive Engineers). Table 2 shows formulations with inventive polymer examples and Table 3 shows formulations with comparative polymer examples.

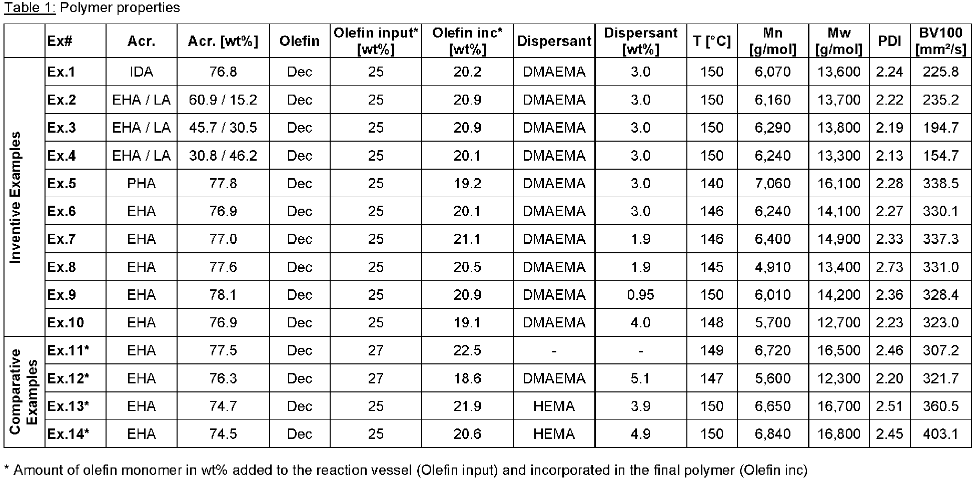

**Table 2: 75W-90 formulations of nitrogen-functionalized acrylate-olefin copolymers according to the present invention**

| **Form. Ex.** | **F-1** | **F-2** | **F-3** | **F-4** | **F-5** | **F-6** | **F-7** | **F-8** | **F-9** | **F-10** |
|---|---|---|---|---|---|---|---|---|---|---|
| **Ex.1 [wt%]** | 33.5 | | | | | | | | | |
| **Ex.2 [wt%]** | | 31.8 | | | | | | | | |
| **Ex.3 [wt%]** | | | 31.8 | | | | | | | |
| **Ex.4 [wt%]** | | | | 32.9 | | | | | | |
| **Ex.5 [wt%]** | | | | | 31.0 | | | | | |
| **Ex.6 [wt%]** | | | | | | 30.6 | | | | |
| **Ex.7 [wt%]** | | | | | | | 30.6 | | | |
| **Ex.8 [wt%]** | | | | | | | | 30.6 | | |
| **Ex.9 [wt%]** | | | | | | | | | 30.6 | |
| **Ex.10 [wt%]** | | | | | | | | | | 31.1 |
| **Anglamol 6043 [wt%]** | 6.5 | 6.5 | 6.5 | 6.5 | 6.5 | 6.5 | 6.5 | 6.5 | 6.5 | 6.5 |
| **VPL 1-300 [wt%]** | 0.5 | 0.5 | 0.5 | 0.5 | 0.5 | 0.5 | 0.5 | 0.5 | 0.5 | 0.5 |
| **Yubase 4 [wt%]** | 29.5 | 20.2 | 19.2 | 20.1 | 22.0 | 22.4 | 22.4 | 22.4 | 22.4 | 22 |
| **Yubase 6 [wt%]** | 30.0 | 41.0 | 42.0 | 40.0 | 40.0 | 40 | 40 | 40 | 40 | 40 |
| **KV40 [mm²/s]** | 93.68 | 93.16 | 90.94 | 89.64 | 94.26 | 93.16 | 93.18 | 92.47 | 91.47 | 95.03 |
| **KV100 [mm²/s]** | 14.40 | 14.51 | 14.43 | 14.39 | 14.88 | 14.43 | 14.58 | 14.48 | 14.49 | 14.58 |
| **VI** | 159 | 162 | 165 | 167 | 166 | 161 | 163 | 163 | 165 | 159 |
| **BF-40 [mPa·s]** | 128,000 | 114,000 | 110,000 | 122,000 | 110,000 | 122,000 | 124,000 | 119,000 | 126,000 | 136,000 |
| **SL 100°C [%]** | 6.2 | 5.9 | 5.7 | 4.8 | 8.9 | 3.3 | 4.1 | 4.6 | 4.9 | 4.8 |
| **Oxidized oil KV40 [mm²/s]** | 223.9 | 209.2 | 193.8 | 190.2 | 212.0 | 201.5 | 184.8 | 178.4 | 163.4 | 214.4 |
| **Oxidized oil KV100 [mm²/s]** | 28.02 | 27.11 | 25.95 | 26.08 | 27.53 | 26.08 | 24.85 | 24.29 | 22.85 | 26.80 |
| **delta KV100 [mm²/s]** | 13.06 | 12.60 | 11.52 | 11.69 | 12.65 | 11.67 | 10.27 | 9.81 | 8.39 | 12.14 |
| **delta KV100 [%]** | 87.30 | 86.84 | 79.83 | 81.24 | 85.01 | 80.99 | 70.44 | 67.75 | 58.02 | 82.81 |
| **Fresh oil TAN [mg KOH/g]** | 1.4 | 1.4 | 1.4 | 1.4 | 1.2 | 1.4 | 1.3 | 1.3 | 1.2 | 1.5 |
| **Oxidized oil TAN [mg KOH/g]** | 5.6 | 5.0 | 5.3 | 5.7 | 5.3 | 5.1 | 4.3 | 4.2 | 3.5 | 5.9 |
| **Blotterspot area [%]** | 100.00 | 100.00 | 100.00 | 100.00 | 100.00 | 100.00 | 100.00 | 100.00 | 100.00 | 100.00 |

**Table 3: 75W-90 formulations of comparative copolymers**

| **Form. Ex.** | **F-1*** | **F-2*** | **F-3*** | **F-4*** |
|---|---|---|---|---|
| **Ex.11* [wt%]** | 30.6 | | | |
| **Ex.12* [wt%]** | | 31.0 | | |
| **Ex.13* [wt%]** | | | 30.0 | |
| **Ex.14* [wt%]** | | | | 29.3 |
| **Anglamol 6043 [wt%]** | 6.5 | 6.5 | 6.5 | 6.5 |
| **VPL 1-300 [wt%]** | 0.5 | 0.5 | 0.5 | 0.5 |
| **Yubase 4 [wt%]** | 19.4 | 22.0 | 23.0 | 23.7 |
| **Yubase 6 [wt%]** | 43.0 | 40.0 | 40.0 | 40.0 |
| **KV40 [mm²/s]** | 91.73 | 95.11 | 93.50 | 88.43 |
| **KV100 [mm²/s]** | 14.55 | 14.54 | 14.69 | 14.22 |
| **VI** | 165 | 159 | 164 | 167 |
| **BF-40 [mPa·s]** | 116,000 | 144,000 | 142,000 | 118,000 |
| **SL 100°C [%]** | 4.3 | 5.4 | 5.7 | 5.4 |
| **Oxidized oil KV40 [mm²/s]** | 148.1 | 268.8 | 488.1 | 1587 - 1675 |
| **Oxidized oil KV100 [mm²/s]** | 21.21 | 30.75 | 60.03 | 148.9 - 152.3 |
| **delta KV100 [mm²/s]** | 6.66 | 16.25 | 45.23 | 134.74 - 138.14 |
| **delta KV100 [%]** | 45.77 | 112.07 | 305.61 | 951.55 - 975.56 |
| **Fresh oil TAN [mg KOH/g]** | 1.0 | 1.5 | 1.0 | 1.0 |
| **Oxidized oil TAN [mg KOH/g]** | 2.9 | 7.9 | 2.5 | 2.6 |
| **Blotterspot area [%]** | 10.52 | 100.00 | 100.00 | 100.00 |

Comparative Ex.11* of the present patent application is similar to example 5 of EP401604 comprising EHA and 1-decene. These copolymers comprising EHA, which are consequently rather polar due to the short side-chain, show poor performance in the dispersancy rating (blotterspot area) of the oxidation test according to CEC SG-L-48 as shown in formulation example F-1* in Table 3. Better performance in sludge handling is achieved with the inventive nitrogen-functionalized acrylate-olefin copolymers according to the invention. Indeed, as shown in Table 2 above, the oxidation tests of the 75W-90 formulations comprising the inventive nitrogen-functionalized acrylate-olefin copolymers according to the invention (F-1 to F-10) deliver good oxidative performance with 100% dispersancy rating in the blotterspot test (blotterspot area).

It has been observed that the inventive nitrogen-functionalized acrylate-olefin copolymers provide the most consistent performance with regard to sludge sedimentation, even at reduced concentration of the nitrogen-dispersant monomer units (e.g. Ex.9, F-9). The copolymers according to the invention have advantageously the lowest increase in viscosity relative to the concentration of dispersant monomer. For all formulations with polymers according to the present invention, the increase of the KV100 between fresh and oxidized oil (delta KV100) is below 90%. In contrast, for the comparative formulation F-2* including comparative Ex.12* which contains more than 5 wt% of the same dispersant monomer, a higher increase of > 110% was found.

Comparison was also made between copolymers comprising OH-functional monomer units (HEMA) and nitrogen-functionalized acrylate-olefin copolymers according to the invention. The effect of a larger viscosity increase is even more pronounced when switching to polymers comprising OH-functional dispersant monomer units as shown in formulations F-3* and F-4* (with comparative polymers Ex.13* and Ex.14*, respectively), instead of comparative copolymers made with more than 5 wt% of nitrogen dispersant monomer units (Ex.12*, F-2*). Indeed, an increase of KV100 of 300% up to 950% was measured. For F-4* using Ex.14*, it was not even possible to clearly determine the values for the increase of the KV100 between fresh and oxidized oil, but only a range for the increase can be given.

The inventive acrylate-olefin copolymers according to the invention comprising nitrogen dispersant monomer units, such as DMAEMA, exhibit good oxidative performance with good dispersancy and low increase of the KV100 value due to oxidation compared to similar acrylate-olefin copolymers with OH-functional dispersant monomer units. The polymer outside the claimed composition, i.e. with a higher content of DMAEMA, exhibit a higher increase of the kinematic viscosity at 100°C after oxidation. Thus, the type and amount of dispersant monomer is crucial for the oxidative performance the lubricant formulation comprising the polymer.

## Claims

1. A copolymer comprising:
a) 60 to 99.8% by weight, based on the total weight of the copolymer, of monomer units derived from at least one acrylate of formula (I), 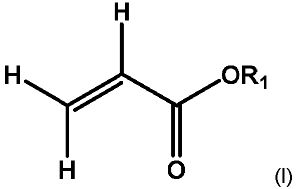 wherein R₁ means a linear or branched alkyl group having from 8 to 15 carbon atoms,
b) 0.1 to 39.9 % by weight, based on the total weight of the copolymer, of monomer units derived from at least one non-functionalized alpha-olefin of formula (II), 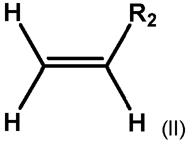 wherein R₂ means a linear alkyl group having from 8 to 14 carbon atoms, and
c) 0.1 to 5% by weight, based on the total weight of the copolymer, of monomer units derived from at least one amino functional (meth)acrylate ester of formula (III), 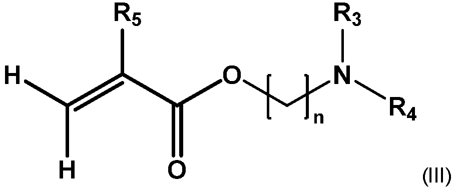
wherein n is an integer of 1 to 10,
wherein R₃ and R₄ are independently selected from a linear or branched alkyl group having from 1 to 5 carbon atoms, and
wherein R₅ is a hydrogen or a methyl group,
and wherein the copolymer has a weight-average molecular weight from 5,000 to 30,000 g/mol according to DIN 55672-1.

2. The copolymer according to claim 1, wherein the copolymer comprises from 70 to 89.5% by weight, preferably from 74 to 84% by weight, of monomer units a) derived from at least one acrylate of formula (I), based on the total weight of the copolymer.

3. The copolymer according to claim 1 or 2, wherein the copolymer comprises from 5 to 35% by weight, preferably from 10 to 29.5% by weight, more preferably from 15 to 25% by weight, of monomer units b) derived from at least one non-functionalized alpha-olefin of formula (II), based on the total weight of the copolymer.

4. The copolymer according to any one of the previous claims, wherein the copolymer comprises from 0.5 to 4.5% by weight, preferably from 0.8 to 4.5% by weight, of monomer units c) derived from at least one amino functional (meth)acrylate ester of formula (III), based on the total weight of the copolymer.

5. The copolymer according to any one of the previous claims, wherein the copolymer has a kinematic viscosity from 100 to 1,000 mm²/s at 100°C according to ASTM D 445, preferably from 100 to 700 mm²/s at 100°C according to ASTM D 445, more preferably from 100 to 500 mm²/s at 100°C according to ASTM D 445.

6. The copolymer according to any one of the previous claims, wherein the acrylates a) of formula (I) are selected from the group consisting of n-octyl acrylate, 2-ethylhexyl acrylate, 2-propylheptyl acrylate, isononyl acrylate, n-decyl acrylate, isodecyl acrylate, isotridecyl acrylate, lauryl acrylate, or a mixture thereof.

7. The copolymer according to any one of the previous claims, wherein the non-functionalized alpha-olefin b) of formula (II) is selected from the group consisting of decene, dodecene, tetradecene, hexadecene or a mixture thereof.

8. The copolymer according to any one of the previous claims, wherein the amino functional (meth)acrylate ester of formula (III) is selected from the group consisting of 2-dimethylamino ethyl methacrylate, 2-dimethylamino ethyl acrylate, 2-diethylamino ethyl methacrylate, 2-diethylamino ethyl acrylate, or a mixture thereof.

9. The copolymer according to any one of the previous claims, wherein the total amount of monomer units derived from monomers a), b) and c) in the copolymer sums up to 90% by weight or more, preferably sums up to 95% by weight or more, more preferably sums up to 100% by weight, based on the total weight of the copolymer.

10. The copolymer according to any one of the previous claims, wherein the copolymer has a weight-average molecular weight from 8,000 to 30,000 g/mol, preferably from 10,000 to 25,000 g/mol, more preferably, from 12,000 to 20,000 g/mol, according to DIN 55672-1.

11. The copolymer according to any one of the previous claims, wherein the copolymer has a polydispersity index from 1.0 to 3.5, preferably from 1.5 to 3.0.

12. A method for the preparation of a copolymer as defined in any one of claims 1 to 11, wherein the method comprises the steps of:
i) providing a monomer composition according to any one of claims 1 to 4 and 6 to 9,
ii) initiating radical polymerization in the monomer composition of step i) to obtain the copolymer.

13. A lubricant composition comprising one or more base oil and at least one copolymer according to any one of claims 1 to 11.

14. Use of a copolymer as defined in any one of claims 1 to 11, as a lubricant additive or a synthetic base fluid, by adding said copolymer to a lubricating oil composition, preferably a gear oil composition, a transmission oil composition, a hydraulic oil composition, an engine oil composition, a marine oil composition, an industrial lubricating oil composition or in grease.

15. Method of thickening a lubricating oil composition and improving the dispersancy and/or reducing the sludge sedimentation of a lubricating oil composition by adding a copolymer as defined in any one of claims 1 to 11, as a lubricant additive or a synthetic base fluid, to said lubricating oil composition.

## Patentansprüche

1. Copolymer umfassend:
a) 60 bis 99,8 Gew.-%, bezogen auf das Gesamtgewicht des Copolymers, an Monomereinheiten abgeleitet von wenigstens einem Acrylat der Formel (I), 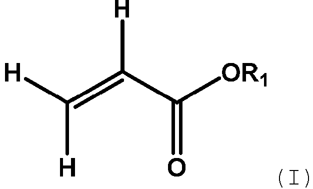 wobei R₁ eine lineare oder verzweigte Alkylgruppe mit von 8 bis 15 Kohlenstoffatomen bedeutet,
b) 0,1 bis 39,9 Gew.-%, bezogen auf das Gesamtgewicht des Copolymers, an Monomereinheiten abgeleitet von wenigstens einem nichtfunktionalisierten alpha-Olefin der Formel (II), 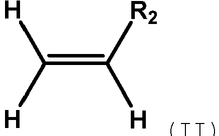 wobei R₂ eine lineare Alkylgruppe mit von 8 bis 14 Kohlenstoffatomen bedeutet, und
c) 0,1 bis 5 Gew.-%, bezogen auf das Gesamtgewicht des Copolymers, an Monomereinheiten abgeleitet von wenigstens einem aminofunktionellen (Meth)acrylatester der Formel (III), 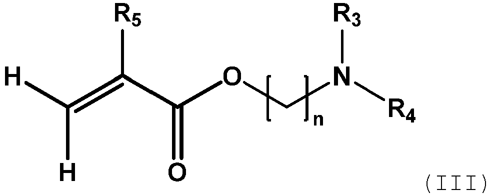
wobei n eine ganze Zahl von 1 bis 10 ist,
wobei R₃ und R₄ unabhängig ausgewählt sind aus einer linearen oder verzweigten Alkylgruppe mit 1 bis 5 Kohlenstoffatomen, und
wobei R₅ ein Wasserstoff oder eine Methylgruppe ist,
und wobei das Copolymer ein gewichtsgemitteltes Molekulargewicht von 5.000 bis 30.000 g/mol nach DIN 55672-1 aufweist.

2. Copolymer nach Anspruch 1, wobei das Copolymer von 70 bis 89,5 Gew.-%, vorzugsweise von 74 bis 84 Gew.-%, an Monomereinheiten a) abgeleitet von wenigstens einem Acrylat der Formel (I), bezogen auf das Gesamtgewicht des Copolymers, umfasst.

3. Copolymer nach Anspruch 1 oder 2, wobei das Copolymer von 5 bis 35 Gew.-%, vorzugsweise von 10 bis 29,5 Gew.-%, bevorzugter von 15 bis 25 Gew.-%, an Monomereinheiten b) abgeleitet von wenigstens einem nichtfunktionalisierten alpha-Olefin der Formel (II), bezogen auf das Gesamtgewicht des Copolymers, umfasst.

4. Copolymer nach einem der vorstehenden Ansprüche, wobei das Copolymer von 0,5 bis 4,5 Gew.-%, vorzugsweise von 0,8 bis 4,5 Gew.-%, an Monomereinheiten c) abgeleitet von wenigstens einem aminofunktionellen (Meth)acrylatester der Formel (III), bezogen auf das Gesamtgewicht des Copolymers, umfasst.

5. Copolymer nach einem der vorstehenden Ansprüche, wobei das Copolymer eine kinematische Viskosität von 100 bis 1.000 mm²/s bei 100 °C nach ASTM D 445, vorzugsweise von 100 bis 700 mm²/s bei 100 °C nach ASTM D 445, bevorzugter von 100 bis 500 mm²/s bei 100 °C nach ASTM D 445, aufweist.

6. Copolymer nach einem der vorstehenden Ansprüche, wobei die Acrylate a) von Formel (I) ausgewählt sind aus der Gruppe bestehend aus n-Octylacrylat, 2-Ethylhexylacrylat, 2-Propylheptylacrylat, Isononylacrylat, n-Decylacrylat, Isodecylacrylat, Isotridecylacrylat, Laurylacrylat und einem Gemisch davon.

7. Copolymer nach einem der vorstehenden Ansprüche, wobei das nichtfunktionalisierte alpha-Olefin b) von Formel (II) ausgewählt ist aus der Gruppe bestehend aus Decen, Dodecen, Tetradecen, Hexadecen und einem Gemisch davon.

8. Copolymer nach einem der vorstehenden Ansprüche, wobei der aminofunktionelle (Meth)acrylatester von Formel (III) ausgewählt ist aus der Gruppe bestehend aus 2-Dimethylaminoethylmethacrylat, 2-Dimethylaminoethylacrylat, 2-Diethylaminoethylmethacrylat, 2-Diethylaminoethylacrylat und einem Gemisch davon.

9. Copolymer nach einem der vorstehenden Ansprüche, wobei die Gesamtmenge an Monomereinheiten abgeleitet von Monomeren a), b) und c) in dem Copolymer eine Summe von 90 Gew.-% oder mehr bildet, vorzugsweise eine Summe von 95 Gew.-% oder mehr bildet, bevorzugter eine Summe von 100 Gew.-% bildet, bezogen auf das Gesamtgewicht des Copolymers.

10. Copolymer nach einem der vorstehenden Ansprüche, wobei das Copolymer ein gewichtsgemitteltes Molekulargewicht von 8.000 bis 30.000 g/mol, vorzugsweise von 10.000 bis 25.000 g/mol, bevorzugter von 12.000 bis 20.000 g/mol, nach DIN 55672-1 aufweist.

11. Copolymer nach einem der vorstehenden Ansprüche, wobei das Copolymer einen Polydispersitätsindex von 1,0 bis 3,5, vorzugsweise von 1,5 bis 3,0, aufweist.

12. Verfahren zur Herstellung eines Copolymers nach einem der Ansprüche 1 bis 11, wobei das Verfahren die Schritte umfasst:
i) Bereitstellen einer Monomerzusammensetzung nach einem der Ansprüche 1 bis 4 und 6 bis 9,
ii) Auslösen von Radikalpolymerisation in der Monomerzusammensetzung von Schritt i), um das Copolymer zu erhalten.

13. Schmiermittelzusammensetzung umfassend ein oder mehrere Grundöle und wenigstens ein Copolymer nach einem der Ansprüche 1 bis 11.

14. Verwendung eines Copolymers nach einem der Ansprüche 1 bis 11 als Schmiermittelzusatzstoff oder synthetisches Grundfluid durch Zugeben des Copolymers zu einer Schmierölzusammensetzung, vorzugsweise einer Getriebeölzusammensetzung, einer Transmissionsölzusammensetzung, einer Hydraulikölzusammensetzung, einer Motorölzusammensetzung, einer Schiffsölzusammensetzung, einer industriellen Schmierölzusammensetzung oder in Schmierfett.

15. Verfahren zum Verdicken einer Schmierölzusammensetzung und Verbessern der Dispergierbarkeit und/oder zum Verringern der Schlammsedimentation einer Schmierölzusammensetzung durch Zugeben eines Copolymers nach einem der Ansprüche 1 bis 11 als Schmiermitteladditiv oder synthetisches Grundfluid zu der Schmierölzusammensetzung.

## Revendications

1. Copolymère comprenant :
a) 60 à 99,8 % en poids, sur la base du poids total du copolymère, de motifs monomères dérivés d'au moins un acrylate de formule (I), 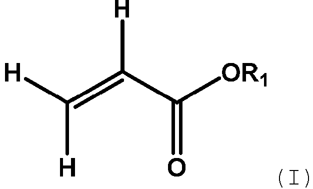 dans laquelle R₁ signifie un groupe alkyle linéaire ou ramifié ayant de 8 à 15 atomes de carbone,
b) 0,1 à 39,9 % en poids, sur la base du poids total du copolymère, de motifs monomères dérivés d'au moins une alpha-oléfine non fonctionnalisée de formule (II), 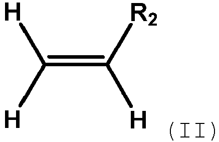 dans laquelle R₂ signifie un groupe alkyle linéaire ayant de 8 à 14 atomes de carbone, et
c) 0,1 à 5 % en poids, sur la base du poids total du copolymère, de motifs monomères dérivés d'au moins un ester de (méth)acrylate fonctionnalisé par amino de formule (III), 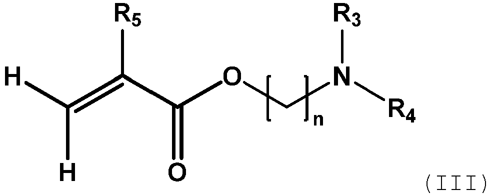
dans laquelle n est un entier de 1 à 10,
dans laquelle R₃ et R₄ sont indépendamment choisis parmi un groupe alkyle linéaire ou ramifié ayant de 1 à 5 atomes de carbone, et
dans laquelle R₅ est un hydrogène ou un groupe méthyle, et dans lequel le copolymère a un poids moléculaire moyen en poids de 5 000 à 30 000 g/mole selon la norme DIN 55672-1.

2. Copolymère selon la revendication 1, le copolymère comprenant de 70 à 89,5 % en poids, de préférence de 74 à 84 % en poids, de motifs monomères a) dérivés d'au moins un acrylate de formule (I), sur la base du poids total du copolymère.

3. Copolymère selon la revendication 1 ou 2, le copolymère comprenant de 5 à 35 % en poids, de préférence de 10 à 29,5 % en poids, plus préférablement de 15 à 25 % en poids, de motifs monomères b) dérivés d'au moins une alpha-oléfine non fonctionnalisée de formule (II), sur la base du poids total du copolymère.

4. Copolymère selon l'une quelconque des revendications précédentes, le copolymère comprenant de 0,5 à 4,5 % en poids, de préférence de 0,8 à 4,5 % en poids, de motifs monomères b) dérivés d'au moins un ester de (méth)acrylate fonctionnalisé par amino de formule (III), sur la base du poids total du copolymère.

5. Copolymère selon l'une quelconque des revendications précédentes, le copolymère ayant une viscosité cinématique de 100 à 1000 mm²/s à 100 °C selon ASTM D 445, de préférence de 100 à 700 mm²/s à 100 °C selon la norme ASTM D 445, plus préférablement de 100 à 500 mm²/s à 100 °C selon la norme ASTM D 445.

6. Copolymère selon l'une quelconque des revendications précédentes, dans lequel les acrylates a) de formule (I) sont choisis dans le groupe constitué par l'acrylate de n-octyle, l'acrylate de 2-éthylhexyle, l'acrylate de 2-propylheptyle, l'acrylate d'isononyle, l'acrylate de n-décyle, l'acrylate d'isodécyle, l'acrylate d'isotridécyle, l'acrylate de lauryle, ou un mélange de ceux-ci.

7. Copolymère selon l'une quelconque des revendications précédentes, dans lequel l'alpha-oléfine non fonctionnalisée b) de formule (II) est choisie dans le groupe constitué par le décène, le dodécène, le tétradécène, l'hexadécène ou un mélange de ceux-ci.

8. Copolymère selon l'une quelconque des revendications précédentes, dans lequel l'ester de (méth)acrylate fonctionnalisé par amino de formule (III) est choisi dans le groupe constitué par le méthacrylate de 2-diméthylamino éthyle, l'acrylate de 2-diméthylamino éthyle, le méthacrylate de 2-diéthylamino éthyle, l'acrylate de 2-diéthylamino éthyle ou un mélange de ceux-ci.

9. Copolymère selon l'une quelconque des revendications précédentes, dans lequel la quantité totale de motifs monomères dérivés des monomères a), b) et c) dans le copolymère totalise 90 % en poids ou plus, de préférence totalise 95 % en poids ou plus, plus préférablement totalise 100 % en poids, sur la base du poids total du copolymère.

10. Copolymère selon l'une quelconque des revendications précédentes, dans lequel le copolymère a un poids moléculaire moyen en poids de 8 000 à 30 000 g/mole, de préférence de 10 000 à 25 000 g/mole, plus préférablement, de 12 000 à 20 000 g/mole, selon la norme DIN 55672-1.

11. Copolymère selon l'une quelconque des revendications précédentes, le copolymère ayant un indice de polydispersité de 1,0 à 3,5, de préférence de 1,5 à 3, 0.

12. Procédé de préparation d'un copolymère tel que défini dans l'une quelconque des revendications 1 à 11, le procédé comprenant les étapes de :
i) fourniture d'une composition de monomères dans l'une quelconque des revendications 1 à 4 et 6 à 9,
ii) initiation d'une polymérisation radicalaire dans la composition de monomères de l'étape i) pour obtenir le copolymère.

13. Composition de lubrifiant comprenant une ou plusieurs huiles de base et au moins un copolymère selon l'une quelconque des revendications 1 à 11.

14. Utilisation d'un copolymère tel que défini dans l'une quelconque des revendications 1 à 11, en tant qu'additif de lubrifiant ou fluide de base synthétique, par ajout dudit copolymère à une composition d'huile lubrifiante, de préférence une composition d'huile pour engrenages, une composition d'huile de transmission, une composition d'huile hydraulique, une composition d'huile moteur, une composition d'huile pour bateau, une composition d'huile lubrifiante industrielle ou dans une graisse.

15. Procédé d'épaississement d'une composition d'huile lubrifiante et d'amélioration de la dispersion et/ou de réduction de la sédimentation des boues d'une composition d'huile lubrifiante par ajout d'un copolymère tel que défini dans l'une quelconque des revendications 1 à 11, en tant qu'additif de lubrifiant ou fluide de base synthétique, à ladite composition d'huile lubrifiante.
